# EUROPEAN PATENT SPECIFICATION

(11) **EP 3 280 988 B1**
(45) Date of publication and mention of the grant of the patent: **22.01.2025**
(21) Application number: 16725900.1
(22) Date of filing: 05.04.2016
(51) Int. Cl.: G01M 5/00, G01L 1/20

(54) **DEVICE FOR DETECTING STRAINS AND TRANSMITTING DETECTED DATA**
VORRICHTUNG ZUR DETEKTION VON BELASTUNGEN UND ZUR ÜBERTRAGUNG VON DETEKTIERTEN DATEN
DISPOSITIF DE DÉTECTION DE CONTRAINTES ET DE TRANSMISSION DE DONNÉES DÉTECTÉES

(30) Priority: 10.04.2015 IT TO20150046 U
(43) Date of publication of application: 14.02.2018
(73) Proprietor: Insensus Project S.R.L., 10025 Pino Torinese (TO) (IT)
(72) Inventor: MAISTO, Guido, 10025 Pino Torinese (TO) (IT)
(74) Representative: Robba, Pierpaolo
(86) International application number: PCT/IB2016/051922
(87) International publication number: WO 2016/162788

(56) References cited:
- EP-A1- 1 901 311
- EP-A1- 2 065 681
- WO-A1-2004/068095
- WO-A2-2011/066028
- DE-A1- 102006 035 274
- IT-A1- TO20 120 325
- US-A1- 2006 021 378
- US-A1- 2008 143 216
- MERILAMPI SARI ET AL: "Embedded wireless strain sensors based on printed RFID tag", SENSOR REVIEW, vol. 31, no. 1, 25 January 2011 (2011-01-25), GB, pages 32 - 40, XP055932490, ISSN: 0260-2288, DOI: 10.1108/02602281111099062

## Description

### Technical Field

The present invention relates to a device for detecting strains and transmitting detected data.

More particularly, the present invention relates to a device for detecting the strains occurring in a structure as a result of a load applied thereto.

### Prior Art

The possibility of detecting and monitoring strains in a structure is of utmost importance in a large number of different technical fields, among which the building and construction industry, the automotive industry, the nautical sector, the aeronautical sector and so on can be mentioned as non-limiting examples.

According to prior art, the detection of strains is achieved by using sensors that are either externally applied to the structure to be monitored or are inserted inside the structure itself. Both these solutions, however, are subject to severe limitations.

In the case of sensors externally applied to a structure, strain gauges that are applied by gluing to the surface to be monitored are usually employed. Among the drawbacks of this solution it is possible to highlight the following:
- the sensors are exposed to the action of atmospheric agents;
- the process of applying the sensor(s) by gluing it/them to the structure is difficult and time-consuming;
- also because of the abovementioned atmospheric agents, the adhesion of the sensor(s) to the structure is subject to a fairly rapid deterioration over time, with a consequent loss of reliability of the collected data;
- an accurate and reliable monitoring of the strains undergone by the structure would require a very large number of sensors; however, the wire connections between the sensors and the corresponding reading instruments drastically limits the number of sensors that can be realistically used.

In the case of sensors inserted in the structure itself it is preferred to employ optical fiber sensors with Bragg gratings rather than strain gauges. Such solution, too, involves several drawbacks, among which it is possible to mention the following:
- said optical fibers sensors are very expensive;
- said optical fibers sensors affect the state of strain of the structure within which they are inserted, thereby altering the detected values,
- as said optical fiber sensors must be connected with a wire connection to the respective reading instruments, the wires and cables coming out from the structure create communication paths between the outside and the inside of the structure itself, thus making it easier for moisture to penetrate;

- the provision, inside the structure, of seats for the insertion of said fiber optic sensors creates a discontinuity in the properties of structural strength of the structure, which is likely to lead to points or lines of fracture;
- the inclusion of said sensors inside a structure requires accurate engineering, since the detection points must be selected and determined at the design stage, as they cannot be moved at a later stage, and the physical characteristics of the structure will suffer the above-mentioned changes in terms of structural strength, which changes must be calculated in advance.

Furthermore, both types of known solutions described above require the use of bulky, heavy and expensive hardware systems, as well as of corresponding power supply means for electrically supplying them.

In order to overcome the aforementioned drawbacks, in more recent times composite material sensors have been developed, which contain a conductive element capable of varying its electrical resistance as a function of the dimensional variation undergone as a consequence of an applied load.

Said composite material sensors can be either externally applied to the structure to be monitored or directly inserted inside said structure.

More particularly, in order to overcome the limitations associated with the presence of wire connections between the sensors and the respective reading instruments, it has been proposed to use said composite material sensors in combination with a wireless transmission system for the detected data.

In this respect, see document WO 2004/068095.

Although theoretically the proposed solutions concerning the use of composite material sensors for detecting strains and wirelessly transmitting the detected data are potentially able to provide satisfactory performance, their practical implementation has not so far yielded the expected results in terms of feasibility and reliability of the detected data.

In fact, the practical manufacturing of a device that uses composite material sensors for the detection of strains and combines said sensors with an electronics capable of remotely transmitting the detected data relating to said strains poses a series of problems - both from the mechanical point of view and from the electronic point of view - that can hardly be solved.

Such problems have so far made it impossible to obtain a device the above-mentioned type with the characteristics of simplicity in the acquisition of data and - most importantly - of reliability of the collected and transmitted data that are required for accurately monitoring strains in a structure.

EP 2 065 681 discloses a sensing system that comprises a material having a matrix structure in which a plurality of sensing elements are embedded, which sensing elements have electron distribution and/or transport properties that change in response to a change in a physical or chemical property of the material. For instance, said sensing elements may be conductive elements. The above sensing system further comprises a separate, remote transceiver, including an antenna which is arranged for sending RF signals to the matrix and receiving RF signals from the matrix.

DE 102006035274 discloses a fiber composite component comprising a sensor unit for monitoring load condition of the component. The sensor unit is completely integrated into the component and includes a sensor, a power supply and a signal processing device. The sensor may be an extension sensor, piezo-electric sensor and/or temperature sensor. The extension sensor is made as a wire strain gauge.

US 2007/151356 discloses a mechanical quantity measuring apparatus having a strain detector formed on a single crystal semiconductor substrate for detecting a strain, and bonded to or buried in an object to be measured to measure a strain.

US 2012/011938 discloses a deformation measuring device including at least one strain gauge, producing a signal when it is deformed, at least one substrate, including at least signal processing means and/or means of transmission of the signal by radiofrequency, and means to connect the gauge and the substrate mechanically, including an elastic layer positioned between the gauge and the first substrate. The strain gauge is made of metal.

Merilampi Sari et al.: "Embedded wireless strain sensors based on printed RFID tag" (SENSOR REVIEW, Vol. 31, No. 1, 25.01.2011, pages 32 - 40) discloses a sensor based on passive ultra-high frequency (UHF) radio frequency identification (RFID) technology for measuring large strains. The passive UHF RFID system includes a reader and a tag, said tag consisting of an antenna and a microchip: the reader sends a clock signal and command to the tag and the tag responds by modulating and backscattering the carrier wave. The tag modulates the carrier wave by changing the impedance of the chip. The tag, as well as silver ink conductors, are printed on PVC or fabric substrates.

ITTO20120325 discloses a measurement and transmission system, integrated into a composite material as part or all of the dispersed phase, capable of measuring at the inside the mechanical stress to which said composite material is subjected and to transmit the data thus recorded outside of said composite material, said system comprising one or more deformation sensors, made of impregnable and electrically conductive fiber, one or more antennas, made of impregnable and electrically conductive fiber, and an integrated system on chip, able to read the information collected by said sensors and retransmit them to the outside through said antennas.

The main object of the present invention is to overcome the aforesaid drawbacks by providing a device for detecting strains and transmitting detected data which can be applied to the surface of a structure to be monitored or incorporated in said structure, while at the same time being simple and reliable.

These and other objects are achieved with the device for detecting strains and transmitting the detected data as claimed in the appended claims.

### Disclosure of the Invention

The device for detecting strains and transmitting detected data comprises at least:
- a strain sensor, the dimensional variations of which, which are caused by the applied load, bring about variations of its electrical resistance,
- an electronic circuit adapted to detect said electrical resistance variations,
- an antenna adapted to wirelessly transmit outside the data detected by said strain sensor and processed by said electronic circuit,
- a matrix made of an electrically insulating material, in which matrix said strain sensor, said electronic circuit and said antenna are embedded.

Consequently, the strain sensor - embedded in the electrically insulating matrix - is isolated from possible perturbations related to the surrounding environment.

Moreover, also the electronic circuit and the antenna are isolated from possible perturbations related to the surrounding environment.

According to the invention, said strain sensor is made of a material selected from the group comprising electrically conductive resins and electrically conductive inks.

In an example not covered by the current claims, the strain sensor is made of metals or metal alloys, this allows to combine a high simplicity with an equally high precision and reliability. As the strain sensor is made of electrically conductive resins or electrically conductive inks, this ensures an additional advantage, related to the extreme versatility in terms of size and shape obtainable for the strain sensor. Suffice it to say that, in the case of using electrically conductive inks it is possible to resort to printing techniques for making the sensor. Accordingly, the geometry of the strain sensor can be realized according to a desired pattern, which allows to adapt said geometry to the specific needs in terms of detection of the strains.

According to preferred and non-limiting embodiments of the device according to the invention, the electrically insulating matrix can be made of resins and/or glues, such as, for example, polyesters, vinyl esters, epoxy resins and/or phenolic resins.

In the case of existing structures, the device according to the invention can be applied to the surface of the structure to be monitored.

In the case of realization of new structures, the device according to the invention can be applied to the surface of the structure to be monitored or - alternatively - it can also be integrated within the structure itself.

In this case it is possible to provide that the electrically insulating matrix of the device according to the invention is an integral part of the structure for which strain detection is desired, which considerably limits the perturbations caused to the physical and mechanical properties of the structure by the introduction of the device.

In this regard, it will be convenient to provide that the materials used for making the device according to the invention are as homogeneous as possible with the material of the structure to be monitored, with respect to chemical and physical properties, again in order to limit perturbations caused to the physical and mechanical properties of the structure by the introduction of the device.

The presence of at least one antenna in the device according to the invention allows to transmit the detected data to an external reading instrument in wireless mode, by using for example a radio-frequency communication (for example RFID or NCF).

Advantageously, said at least one antenna allows to avoid the use of internal power supply means in the device according to the invention, since the energy required to excite the strain sensor, detect data and transmit said data can be supplied from outside, by radio-frequency.

According to the invention, a shielding layer is coupled to the electronic circuit and the antenna present in the intermediate layer of the device according to the invention, which allows to preserve the correct radio-frequency communication between the device and the external instrument from perturbations due to eddy currents within the conductive layers of the structure to which the device is applied.

### Brief Description of the Drawings

Characteristics and advantages of the invention will become more apparent from the following detailed description of a preferred embodiment of the invention, given by way of non-limiting example with reference to the annexed drawings, in which:
- Figure 1 is a cross-sectional schematic view of a device for detecting strains and transmitting detected data according to the invention;
- Figure 2 is a sectional schematic view taken along the plane II-II of the device of Figure 1.

### Detailed Description of a Preferred Embodiment of the Invention

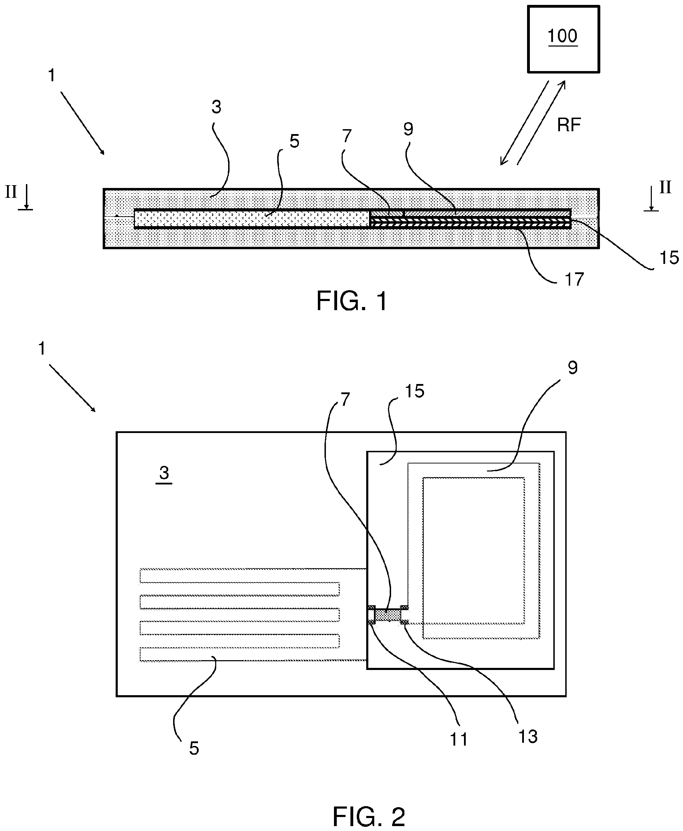

Referring to Figures 1 and 2, there is illustrated a device 1 according to the invention for detecting strains and transmitting detected data.

According to the invention, said device comprises an electrically insulating matrix 3, in which there are embedded at least:
- a strain sensor 5, made as a resistive conductive element, the dimensional variations of which (caused by an applied load) bring about variations of its electrical resistance;
- an electronic circuit 7 comprising means for detecting said electrical resistance variations of said strain sensor 5;
- an antenna 9;
wherein said strain sensor 5 is made of a material selected from the group comprising electrically conductive resins and electrically conductive inks.

It is apparent that said strain sensor 5 and said electronic circuit 7 are electrically connected to each other, for example at corresponding contacts or pads 11, and also said electronic circuit 7 and said antenna 9 are electrically connected to each other, for example at corresponding contacts or pads 13.

The strain sensor 5 can have the desired size and shape. The use of electrically conductive resins and electrically conductive inks allows high versatility, increasing the degrees of freedom in choosing the size and shape of the sensor; advantageously, the sensor can have a large size, much larger than that of strain sensors used in prior art, and its geometry can follow complex patterns.

The electronic circuit 7 and the antenna 9 can be made according to any suitable technology within the reach of those skilled in the art.

In the embodiment shown in the Figures, said electronic circuit 7 and said antenna 9 can be made on one and the same printed circuit board (PCB) 15.

More particularly, said printed circuit board 15 is preferably made as a flexible printed circuit board, obtained for instance from a film of polyamide or a PEEK-type synthetic fabric, whereby the corresponding device 1 as a whole will exhibit some flexibility, which will allow it to adapt to structures having complex surfaces.

The device 1 according to the invention may further comprise one or more sensors (not illustrated) adapted to detect the environmental conditions of the environment surrounding the device itself, such as temperature and humidity.

If provided, said additional sensors too will be electrically connected to the electronic circuit 7 by means of corresponding contacts or pads.

The electronic circuit 7 may further comprise a memory unit allowing to store information about the device 1 and about the data detected by said device during its operation. More particularly, said memory device allows to permanently store in the sensor all the information necessary to interpret the effected detections (including the parameters for calibration of the sensor) and to identify the sensor. When a complex structure is to be monitored, requiring use of large number of devices 1, this considerably simplifies management by eliminating the need to maintain specific external documentations, which are complex to manage and potentially subject to becoming detached or lost.

Still referring to the embodiment shown in the Figures, the device 1 further comprises a shielding layer 17 associated to the printed circuit board 15.

Said shielding layer 17 is made of a ferritic material and its function will become apparent from the description of the operation of the device 1 according to the invention provided here below.
As anticipated above, said device 1 can be applied to a newly built structure as well as to an already existing structure.

The sensing part of the device, consisting of the strain sensor 5 and the electronic circuit 7 connected thereto, is protected from external agents by the matrix 3.

Said matrix 3 not only protects the strain sensor and its electronic circuit from atmospheric agents, but it also electrically isolates them, owing to the fact that it is made of an electrically insulating material.

The antenna 9 allows to communicate wirelessly - for example through radio-frequency - with an external instrument 100.

In a particularly simple variant of the invention, the instrument 100 is able to receive the transmitted data from the antenna 9. In this case, the device 1 must be provided with its own power supply means (batteries) for exciting the strain sensor 5 and supplying the electronic circuit 7.

However, in the preferred embodiment of the invention, the wireless communication between the device 1 and the tool 100 takes place in both directions, as also shown in Figure 1. In this way, it is possible to avoid equipping the device 1 with an internal power supply source, as the energy necessary for its operation comes from the external instrument 100, via radio-frequency or similar wireless mode.

Therefore, when it is desired to detect strains undergone by the structure to which the device 1 is applied, the external instrument 100 supplies the device 1 with the energy required to excite the strain sensor 5.

The dimensional variation undergone by the strain sensor due to the load (stress) to which it is subjected results in a corresponding variation of its electrical resistance; said electrical resistance variation is detected by the electronic circuit 7 and transmitted to the external instrument 100 through the antenna 9.

In the case in which additional sensors suitable for the detection of environmental conditions (temperature, humidity, etc.) are provided, also the data detected by said additional sensors are processed by the electronic circuit 7 and transmitted to the external instrument 100 through the antenna 9.

It is to be noted that the excitation energy can be supplied to the strain sensor 5 simultaneously with the interrogation thereof; alternatively, it is possible to provide for supplying power to the strain sensor 5 and interrogating it at different times, while equipping it at the same time with means for storing power (either wirelessly rechargeable from the outside or disposable).

It will be evident that the operations of detection and transmission of data described above may take place continuously or discretely, and in the latter case they may take place at regular and predetermined time intervals or upon the user's input.

The importance of providing the shielding layer 17 associated to the printed circuit board 15 of the device 1 according to the invention will also be evident from the foregoing description.

Since the radio-frequency communication between the device 1 and the external instrument 100 is a short distance communication, the magnetic component of the radio-frequency emission is the one of greatest importance. The presence of conductive materials in the structure to which the device 1 is applied (carbon, reinforced concrete, metals and so on) near the antenna 9 disturbs or cancels the communication, because of eddy currents that the radio-frequency emission generates in such materials. These eddy currents in turn generate a magnetic field symmetrical and opposite to the field of the radio-frequency emission, which is thus attenuated or canceled.

In the case of the device according to the invention, the problem posed by eddy currents is even more serious, since not only must the radio-frequency communication from the antenna 9 to the external instrument 100 be preserved from the influence of said eddy currents in order to correspondingly preserve the accuracy of the transmitted data, but it is also necessary that the external instrument 100 transmits to said device 1 sufficient energy to properly excite the strain sensor 5 without any negative influence by said eddy currents. Hence the importance of the shielding layer 17.

As mentioned above, said shielding layer is made of a ferritic material.

In this regard it is to be noted that said ferritic material should preferably be chosen depending on the conductive materials in the structure to which the device 1 is applied, so that the shielding effect is optimized according to the specific characteristics of the magnetic field generated by the eddy currents. This is possible when the final destination of the device 1 - that is, the type of structure to which the device will be applied and the materials that compose it - is already known at the production stage.

However, there are cases in which a "universal" device for detecting strains is desired, i.e. a device having a behaviour which is effective whatever its final destination may be. In these cases it is possible to provide for associating to the shielding layer 17 a further conductive layer (not shown) with known characteristics on the basis of which the choice of the ferritic material of the shielding layer 17 has been calibrated. This further conductive layer can be made (for example) of carbon. Since said conductive layer is closer than the conductive materials of the structure to be monitored to the shielding layer 17, the magnetic field generated in said conductive layer is much stronger than that generated in said structure. It follows that - being the ferritic material chosen on the basis of the characteristics of said conductive layer - the device 1 according to the invention is effectively shielded whatever the characteristics of the structure to which it is associated may be.

It is clear from the above that thanks to the structure of the device 1 according to the invention it is therefore possible to correctly detect the strains undergone by the associated structure and transmit the detected distance data to an external instrument 100.

The absence of wire connections allows to apply, to the same structure, a large number of devices for strain detection according to the invention and ensures a considerable freedom in the choice of the positions in which said devices can be applied.

It also ensures a great flexibility, since the number and the position of the devices for strain detection according to the invention can be varied over time depending on the specific needs that may arise from time to time.

It is possible to provide for associating to each of the devices according to the invention a corresponding external instrument (for example in the case of applications where strain detection should take place in a continuous manner), or using only one external instrument in association with all the devices according to the invention (for example in the case of applications in which such devices are interrogated only at discrete time intervals). Therefore, it is evident that the invention achieves the objects set forth above, as it provides a device which allows to detect strains and transmit detected data with great accuracy and reliability, while at the same time showing great simplicity and versatility in terms of practical application.

It will also be evident that the embodiment described above with reference to the accompanying drawings has been given merely by way of non-limiting example, and that modifications and variations within the reach of those skilled in the art may be made without departing from the scope of protection defined by the appended claims.

For example, although in the illustrated embodiment the device includes only one strain sensor, it is also possible to use multiple strain sensors, for example two strain sensors arranged at 90° relative to each another, three strain sensors arranged at 120° relative to one another, and so on.

## Claims

1. Device (1) for detecting strains and transmitting detected data, comprising an electrically insulating matrix (3) in which there are embedded at least:
- one or more strain sensors (5), made as resistive conductive elements, the dimensional variations of which bring about variations of electrical resistance;
- an electronic circuit (7) electrically connected to said one or more sensors at corresponding contacts or pads (11) and adapted to detect said electrical resistance variations;
- an antenna (9) electrically connected to said electronic circuit at corresponding contacts or pads (13) and adapted to transmit said electrical resistance variations detected by said electronic circuit (7) to an external instrument,
wherein said one or more strain sensors (5) are made of a material selected from the group comprising electrically conductive resins and electrically conductive inks,
**characterized in that** a shielding layer (17) made of ferritic material coupled to said electronic circuit (7) and to said antenna (9) is further embedded in said electrically insulating matrix (3).

2. Device (1) according to claim 1, wherein said one or more strain sensors (5) are made of an electrically conductive resin.

3. Device (1) according to claim 1, wherein said one or more strain sensors (5) are made of an electrically conductive ink.

4. Device (1) according to claim 1, wherein said electronic circuit (7) and said antenna (9) are made on one and the same printed circuit board (15).

5. Device (1) according to claim 4, wherein said printed circuit board (15) is made as a flexible printed circuit board.

6. Device (1) according to claim 1, wherein a further conductive layer is associated to said shielding layer.

7. Device (1) according to any of the claims 1 to 6, further comprising, within said matrix (3), one or more sensors adapted to detect environmental conditions of the environment surrounding said device (1) such as, for instance, temperature and humidity.

8. Device (1) according to any of the claims 1 to 7, comprising two strain sensors (5) arranged at 90° relative to each other.

9. Device (1) according to any of the claims 1 to 7, comprising three strain sensors (5) arranged at 120° relative to one another.

## Patentansprüche

1. Vorrichtung (1) zur Detektion von Belastungen und zur Übertragung von detektierten Daten, mit einer elektrisch isolierenden Matrix (3) in die wenigstens eingebettet sind:
- einer oder mehrere Belastungssensoren (5), die als Widerstandselemente ausgebildet sind, deren Änderungen ihrer Ausdehnung Änderungen des elektrischen Widerstands mit sich bringen;
- einer elektronischen Schaltung (7), die elektrisch an den oder die Sensoren an entsprechenden Kontakten oder Flächen (11) angeschlossen und dafür ausgelegt ist, die Änderungen des elektrischen Widerstands zu detektieren;
- einer Antenne (9), die elektrisch an die elektronische Schaltung an entsprechenden Kontakten oder Flächen (13) angeschlossen und dafür ausgelegt ist, die von der elektrischen Schaltung detektierten Änderungen des elektrischen Widerstandes an ein externes Instrument zu übermitteln,
wobei der die Belastungssensoren (5) aus einem Material hergestellt sind, das aus einer Gruppe ausgewählt ist, die elektrisch leitende Harze und elektrisch leitende Tinten enthält,
**dadurch gekennzeichnet, dass** in die elektrisch isolierende Matrix (3) zusätzlich eine aus ferritischem Material hergestellte Abschirmschicht (17), die an die elektronische Schaltung (7) und die Antenne (9) gekoppelt ist, eingebettet ist.

2. Vorrichtung (1) nach Anspruch 1, wobei der oder die Belastungssensoren (5) aus einem elektrisch leitenden Harz hergestellt sind.

3. Vorrichtung (1) nach Anspruch 1, wobei der oder die Belastungssensoren (5) aus einer elektrisch leitenden Tinte hergestellt sind.

4. Vorrichtung (1) nach Anspruch 1, wobei die elektronische Schaltung (7) und die Antenne (9) auf derselben Leiterplatte (15) ausgebildet sind.

5. Vorrichtung (1) nach Anspruch 4, wobei die Leiterplatte (15) als eine flexible Leiterplatte ausgebildet ist.

6. Vorrichtung (1) nach Anspruch 1, wobei eine weitere leitende Schicht der Abschirmschicht zugeordnet ist.

7. Vorrichtung (1) nach einem der Ansprüche 1 bis 6, zusätzlich mit einem oder mehreren Sensoren in der Matrix (3), die dafür ausgelegt sind, Umgebungsbedingungen der die Vorrichtung (1) umgebenden Umgebung zu detektieren, wie beispielsweise Temperatur und Feuchtigkeit.

8. Vorrichtung (1) nach einem der Ansprüche 1 bis 7, mit zwei oder mehr Belastungssensoren (5), die unter 90° relativ zueinander angeordnet sind.

9. Vorrichtung (1) nach einem der Ansprüche 1 bis 7 mit drei Belastungssensoren (5) die unter 120° relativ zueinander angeordnet sind.

## Revendications

1. - Dispositif (1) de détection de contraintes et de transmission de données détectées, comprenant une matrice électriquement isolante (3) dans laquelle sont incorporés au moins :
- un ou plusieurs capteurs de contraintes (5), réalisés sous la forme d'éléments conducteurs résistifs, dont les variations dimensionnelles entraînent des variations de résistance électrique ;
- un circuit électronique (7) connecté électriquement audit ou audits capteurs au niveau de contacts ou plots (11) correspondants et conçu pour détecter lesdites variations de résistance électrique ;
- une antenne (9) connectée électriquement audit circuit électronique au niveau de contacts ou plots (13) correspondants et conçue pour transmettre lesdites variations de résistance électrique détectées par ledit circuit électronique (7) à un instrument externe,
dans lequel ledit ou lesdits capteurs de contraintes (5) sont réalisés en un matériau choisi parmi le groupe comprenant des résines électriquement conductrices et des encres électriquement conductrices,
**caractérisé par le fait qu'**une couche de blindage (17) réalisée en matériau ferritique et couplée audit circuit électronique (7) et à ladite antenne (9) est en outre incorporée dans ladite matrice électriquement isolante (3).

2. - Dispositif (1) selon la revendication 1, dans lequel ledit ou lesdits capteurs de contraintes (5) sont réalisés en une résine électriquement conductrice.

3. - Dispositif (1) selon la revendication 1, dans lequel ledit ou lesdits capteurs de contraintes (5) sont réalisés en une encre électriquement conductrice.

4. - Dispositif (1) selon la revendication 1, dans lequel ledit circuit électronique (7) et ladite antenne (9) sont réalisés sur une seule et même carte de circuits imprimés (15).

5. - Dispositif (1) selon la revendication 4, dans lequel ladite carte de circuits imprimés (15) est réalisée sous la forme d'une carte de circuits imprimés flexible.

6. - Dispositif (1) selon la revendication 1, dans lequel une couche conductrice supplémentaire est associée à ladite couche de blindage.

7. - Dispositif (1) selon l'une quelconque des revendications 1 à 6, comprenant en outre, dans ladite matrice (3), un ou plusieurs capteurs conçus pour détecter des conditions environnementales de l'environnement entourant ledit dispositif (1) telles que, par exemple, la température et l'humidité.

8. - Dispositif (1) selon l'une quelconque des revendications 1 à 7, comprenant deux capteurs de contraintes (5) disposés à 90° l'un par rapport à l'autre.

9. - Dispositif (1) selon l'une quelconque des revendications 1 à 7, comprenant trois capteurs de contraintes (5) disposés à 120° les uns par rapport aux autres.
